# FASCICULE DE BREVET EUROPEEN

(11) **EP 0 479 228 B1**
(45) Date de publication et mention de la délivrance du brevet: **01.03.1995**
(21) Numéro de dépôt: 91116754.2
(22) Date de dépôt: 01.10.1991
(51) Int. Cl.: F16K 47/02, F16L 55/045, F16K 1/22

(54) **Clapet d'étranglement pour limiter les variations brusques de flux gazeux dans une conduite**
Drosselklappe zur Begrenzung von plötzlichen Gasstromschwankungen in einer Leitung
Throttle valve to limit the gas flow snap variations in a duct

(30) Priorité: 02.10.1990 FR 9012120
(43) Date de publication de la demande: 08.04.1992
(73) Titulaire: ALCATEL CIT, 75008 Paris (FR)
(72) Inventeur: Vuillermoz, Jean-François, F-74940 Annecy le Vieux (FR)
(74) Mandataire: Weinmiller, Jürgen

(56) Documents cités:
- FR-A- 1 435 487
- FR-A- 2 236 147
- FR-A- 2 276 524
- GB-A- 1 533 073
- US-A- 2 200 723
- US-A- 3 026 893

## Description

La présente invention concerne un clapet d'étranglement pour éviter les variations brusques de flux gazeux dans une conduite.

L'invention s'applique en particulier aux canalisations dans le domaine du vide pour protéger des mécanismes sensibles aux "coups de bélier" ou pour éviter le soulèvement de particules dans des installations, lors de déplacement de gaz trop rapides, au moment du démarrage d'une pompe à vide par exemple.

Un clapet d'étranglement correspondant aux caractéristiques mentionnées en préambule de la revendication 1 est connu du catalogue 1986 pages 292-293 de la Société VAT Aktiengesellschaft CH 9469 Haag et consiste en une couronne cylindrique épaulée assurant le positionnement entre deux extrémités d'une canalisation mises bout à bout. Un joint torique est disposé entre les deux extrémités de la canalisation autour de la surface extérieure de la couronne.

Le diamètre intérieur de la couronne circulaire comporte un rétrécissement formant un épaulement. Cet épaulement rétrécit le diamètre nominal de la conduite. A l'intérieur de la couronne sont disposés deux demi-volets circulaires pouvant pivoter sur un axe diamétral. En position fermée, les deux demi-volets prennent appui sur l'épaulement et ils sont sollicités à l'ouverture par un ressort hélicoïdal de torsion enfilé sur l'axe. En l'absence de sollicitation les deux demi-volets sont donc ouverts et forment un V dont la fermeture des branches est limitée par une patte métallique soudée sous chaque demi-volet et prenant appui contre la paroi de la conduite.

Un tel clapet d'étranglement permet bien d'éviter la prorogation de l'onde de choc du "coup de bélier" ou d'éviter le soulèvement de particules dues à un flux gazeux trop important, cependant l'utilisation d'un ressort est préjudiciable à une longue durée de vie du mécanisme dès que les mouvements des volets sont fréquents. Si le ressort se rompt, le clapet ne s'ouvre plus, et les risques d'avarie des éléments situés en aval du dispositif sont importants. Dans certains cas, ceci ne peut être envisagé.

L'invention a ainsi pour but de pallier cet inconvénient et a pour objet un clapet d'étranglement pour limiter les variations brusques de flux gazeux dans une conduite, comprenant un corps fixe de raccordement constituant une couronne et susceptible d'être interposé entre deux extrémités de conduite ou entre une extrémité de conduite et une capacité, lesdites extrémités de conduite ou ladite extrémité de conduite et la zone de raccordement de ladite capacité ayant un diamètre voisin du diamètre interne de la couronne, caractérisé en ce que ledit corps fixe est équipé intérieurement d'un volet de surface développée circulaire pivotant librement autour d'un axe diamétral, ledit volet n'étant pas plan mais formant un dièdre dont l'arête est une corde de la surface développée circulaire du volet, sa rotation étant libre et sans frottement avec ledit corps fixe, en ce que ledit volet est plus lourd d'un côté de l'axe que de l'autre, la position du volet résultant de son équilibre entre la force due à la pesanteur et à la force exercée sur le volet par l'action d'un éventuel flux gazeux, lequel ayant pour effet de faire pivoter le volet dans le sens de l'étranglement de la conduite.

Selon une réalisation avantageuse de la présente invention, ledit clapet est constitué d'une part d'une tôle plane constituant plus d'un demi-cercle et moins d'un cercle et d'autre part d'une masselotte fixée à la partie de ladite tôle située du côté de l'axe ou la tôle s'interrompt selon une corde avant de finir le cercle, l'une des surfaces de ladite masselotte constituant la seconde surface dudit dièdre dudit volet dont la première surface est constituée par ladite tôle.

Selon une autre réalisation, ledit volet est constitué par une tôle circulaire pliée selon une corde, l'une des deux parties de la tôle ainsi pliée étant lestée d'un balourd.

Selon une autre caractéristique, l'arête dudit dièdre est une corde passant par le centre de la surface développée circulaire dudit volet.

On va maintenant donner la description d'un exemple de mise en oeuvre de l'invention en se référant aux dessins annexés dans lesquels :
Les figures 1 et 2 montrent en coupe et en vue de dessus un clapet d'étranglement selon l'invention.
La figure 3 est un détail montrant la masselotte vue selon la flèche III de la figure 1.
La figure 4 est une vue schématique d'une variante de l'invention.
La figure 5 représente une autre variante de l'invention.

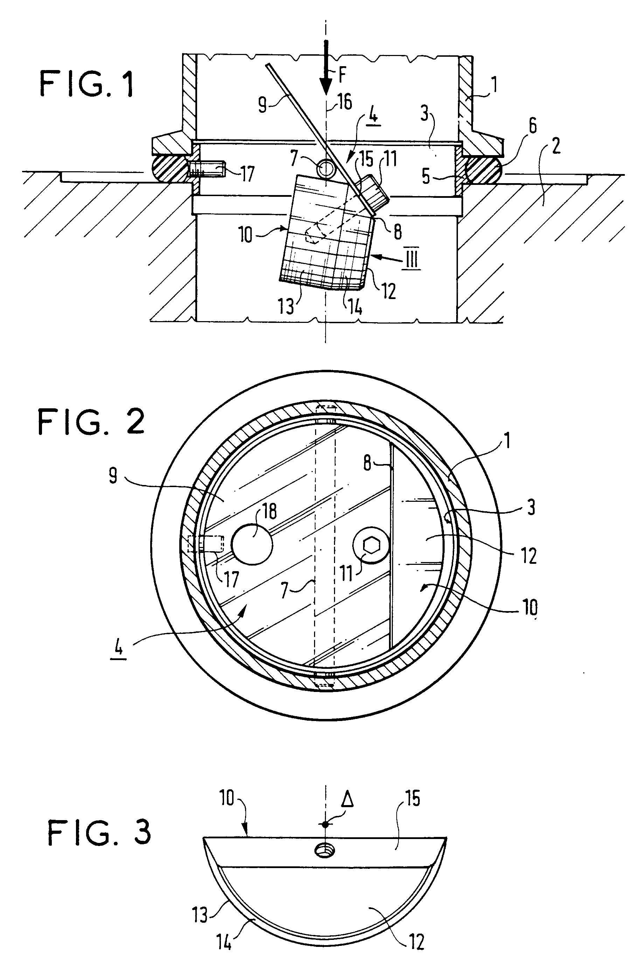

En se reportant aux figures 1 à 3, on voit un clapet d'étranglement disposé entre l'extrémité d'une conduite 1 et une capacité 2. Le clapet d'étranglement se compose d'un corps fixe de raccordement 3 et d'un volet pivotant 4. Le corps fixe de raccordement 3 constitue une couronne comportant un épaulement externe 5 assurant son positionnement entre la conduite 1 et la capacité 2. Un joint 6 est disposé autour du corps fixe 3 entre l'extrémité de la conduite 1 et la capacité 2. Le diamètre interne du corps fixe 3 est très voisin de celui de la conduite 1.

Le volet 4 est monté pivotant à l'intérieur du corps fixe 3. Il est solidaire d'un axe diamétral 7 qui tourillonne librement à ses extrémités dans des alésages réalisés dans le corps 3. La forme développée du volet 4 est circulaire, mais il n'est pas plan et forme un dièdre dont l'arête est une corde 8 de la surface développée circulaire du volet 4. Le volet 4 est ainsi formé d'une part d'une tôle plane 9 faisant plus d'un demi-cercle et moins d'un cercle complet, et d'autre part d'une masselotte 10 fixée par une vis 11 à la tôle 9 dans sa partie située du côté de l'axe 7 où la tôle 4 s'interrompt selon la corde 8. La surface 12 de la masselotte 10 est une portion de cercle limitée par la corde 8 et constitue la deuxième partie du volet 4 dont la première partie est constituée par la tôle 9, les deux parties 9 et 12 forment un dièdre dont l'arête constitue la corde 8 de la surface développée du volet complet 4.

La masselotte 10 constitue un balourd pour le volet 4. Cette masselotte comprend une portion cylindrique 13 d'axe Δ et une portion conique 14 chanfreinée. Un méplat 15 a été réalisé sur la portion conique 14 pour la fixation de la masselotte à la tôle 9. La position spatiale de l'ensemble est celle représentée figure 1, c'est-à-dire que l'axe 16 de la conduite est vertical. Ainsi, en l'absence de différence de pression entre l'amont et l'aval du clapet, la masselotte 10 maintient le clapet ouvert. Lorsqu'un flux gazeux s'écoule dans le sens de la flèche F, le volet 4 prend une position d'équilibre, la fermeture étant d'autant plus complète que l'à-coup au démarrage du pompage est fort, limitant ainsi le flux gazeux et les coups de bélier. Une vis 17 est vissée à l'intérieur de la couronne 3 de manière à servir de butée limitant la rotation du volet 4 dans le sens de la fermeture.

La figure 2 montre le dispositif en vue de dessus par rapport à la figure 1, mais avec le volet 4 en position d'étranglement maximal de la conduite 1, c'est-à-dire en butée contre la vis 17. Comme on le voit sur cette figure, il ne s'agit que d'un étranglement, et non d'une obturation complète. Il s'agit en effet seulement de limiter le flux et non pas de l'arrêter. Il y a donc un jeu entre le volet 4 et la paroi interne du corps fixe 3.

Sur la figure 2, on voit en outre un trou 18 effectué dans le volet 9. Il s'agit d'un trou pour le réglage de l'équilibre du volet. Ce réglage est effectué expérimentalement au cours d'essais.

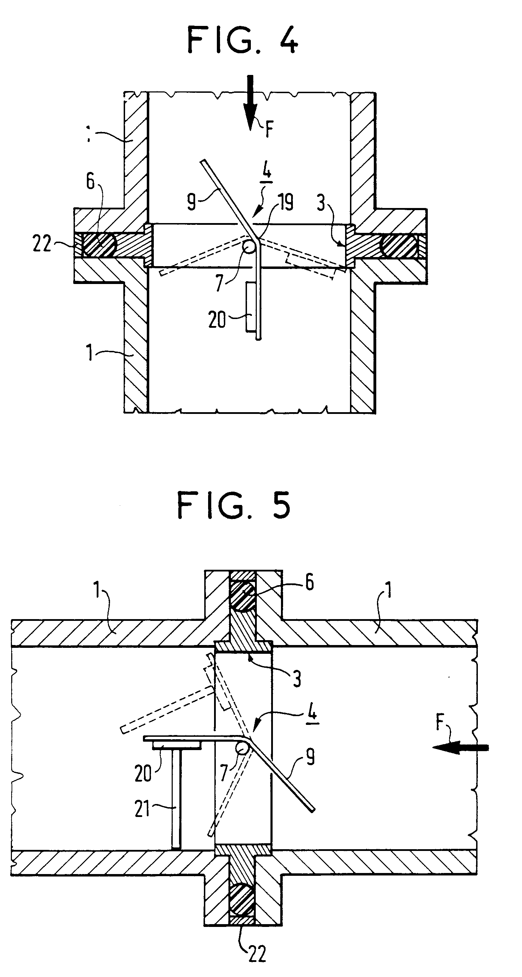

La figure 4 est une vue schématique montrant une variante dans laquelle le dispositif est situé entre deux extrémités d'une conduite 1. Dans cette variante, la totalité du volet 4 est constituée par une tôle circulaire 9 pliée selon son diamètre 19. Un balourd 20 est fixé à l'une des branches de la tôle 9.

Dans cette variante, il n'y a pas de butée d'arrêt de la position fermée.

La figure 5 est un autre exemple dans le cas d'une conduite d'axe horizontal. Dans ce cas, le balourd 20 est muni d'une patte de butée 21 limitant le basculement du volet 4 dans sa position ouverte.

Sur ces deux figures 4 et 5, on a représenté la position de fermeture maximale en traits interrompus fins. En outre, sur ces deux figures également, un anneau de retenue 22 a été disposé autour du joint 6.

L'avantage majeur de l'invention réside dans la robustesse du mécanisme. Il n'y a là ni flexion, ni déformation, seulement le mouvement de rotation du clapet sous l'effet du flux. Il convient donc parfaitement aux systèmes dans lesquels un tel clapet est appelé à un grand nombre de manoeuvres.

Un deuxième avantage tient à sa grande section de passage puisqu'il respecte les dimensions d'un élément de jonction de canalisation standard. Son efficacité est ainsi améliorée en basse pression dans les circuits de vide.

Enfin, de par le principe d'utilisation d'une masse pour créer la position d'équilibre, le réglage d'ouverture peut être obtenu pour des différences de pression extrêmement faibles. De plus, contrairement aux systèmes connus qui nécessitent une variation brutale de flux pour se fermer, il peut s'obturer par remontée lente de cette différence. Il protège donc le mécanisme en toutes circonstances.

## Revendications

1. Clapet d'étranglement pour limiter les variations brusques de flux gazeux dans une conduite (1) comprenant un corps fixe de raccordement (3) constituant une couronne et susceptible d'être interposé entre deux extrémités de conduite (1) ou entre une extrémité de conduite (1) et une capacité (2), lesdites extrémités de conduite ou ladite extrémité de conduite et la zone de raccordement de ladite capacité ayant un diamètre voisin du diamètre interne de la couronne, caractérisé en ce que ledit corps fixe (3) est équipé intérieurement d'un volet (4), de surface développée circulaire, pivotant librement autour d'un axe diamétral (7), ledit volet n'étant pas plan, mais formant un dièdre dont l'arête est une corde (8, 19) de la surface développée circulaire du volet, sa rotation étant libre et sans frottement avec ledit corps fixe (3), et en ce que ledit volet est plus lourd d'un côté de l'axe que de l'autre, la position du volet résultant de son équilibre entre la force due à la pesanteur, et à la force exercée sur le volet par l'action d'un éventuel flux gazeux (F), lequel ayant pour effet de faire pivoter le volet dans le sens de l'étranglement de la conduite.

2. Clapet d'étranglement selon la revendication 1, caractérisé en ce que ledit volet est constitué d'une part d'une tôle plane (9) constituant plus d'un demi-cercle et moins d'un cercle, et d'autre part d'une masselotte (10) fixée à la partie de ladite tôle située du côté de l'axe où la tôle s'interrompt selon une corde (8) avant de finir le cercle, l'une (12) des surfaces de ladite masselotte (10) constituant la seconde surface dudit dièdre dudit volet dont la première surface est constituée par ladite tôle (9).

3. Clapet d'étranglement selon la revendication 1, caractérisé en ce que ledit volet est constitué par une tôle circulaire (9), pliée selon une corde (19), l'une des deux parties de la tôle ainsi pliée étant lestée d'un balourd (20).

4. Clapet d'étranglement selon l'une des revendications 1 ou 3, caractérisé en ce que l'arête dudit dièdre est une corde (19) passant par le centre de la surface développée circulaire dudit volet (4).

## Claims

1. A butterfly valve for limiting sudden variations in gas flow along a duct (1), the valve comprising a fixed coupling body (3) constituting a ring and suitable for being interposed between two duct ends or between one duct end and a volume (2), said duct ends or said duct end and the coupling zone of said volume having a diameter close to the inside diameter of the ring, the valve being characterized in that said fixed body (3) is fitted internally with a flap (4) having a circular developed surface, the flap pivoting freely about a diametral shaft (7), said flap not being plane, but forming a dihedral angle along a ridge that constitutes a chord (8, 19) of the circular developed surface of the flap, the flap being free to rotate without friction relative to said fixed body (3), and in that said flap is heavier on one side of the axis than on the other, with the position of the flap resulting from equilibrium between the force due to gravity and the force exerted on the flap by the action of any gas flow (F), with a flow of gas having the effect of causing the flap to pivot in such a direction as to throttle the duct.

2. A butterfly valve according to claim 1, characterized in that said flap is constituted firstly by a plane sheet (9) occupying more than a semicircle and less than a circle, and secondly by a weight (10) fixed to that portion of said sheet which is situated on the same side of the shaft as the side where the sheet is interrupted along a chord (8) prior to completing the circle, one of the surfaces (12) of the said weight (10) constituting the second surface of the said dihedral angle formed by the flap, with the first surface thereof being constituted by said sheet (9).

3. A butterfly valve according to claim 1, characterized in that said flap is constituted by a circular sheet (9) folded along a chord (19), one of the two portions of the sheet folded in this way being ballasted by an unbalance weight (20).

4. A butterfly valve according to claim 1 or 3, characterized in that the ridge of said dihedral angle constitutes a chord (19) passing through the center of the circular developed surface of said flap (4).

## Patentansprüche

1. Drosselklappe zur Begrenzung der plötzlichen Veränderungen eines Gasflusses in einer Leitung (1), mit einem festen Anschlußkörper (3), der einen Kranz bildet und zwischen zwei Enden einer Leitung (1) oder zwischen ein Ende einer Leitung (1) und einem Gefäß (2) angeordnet werden kann, wobei die Leitungsenden oder das Leitungsende und der Anschlußbereich des Gefäßes einen Durchmesser nahe dem Innendurchmesser des Kranzes haben, dadurch gekennzeichnet, daß der feste Anschlußkörper (3) innen mit einer in Abwicklung kreisförmigen Klappe (4) ausgestattet ist, die frei um eine diametrale Achse (7) schwenkt und nicht eben ist, sondern einen Zweiflächler bildet, dessen Kante eine Sehne (8, 19) der in Abwicklung gesehen kreisförmigen Oberfläche der Klappe bildet, wobei seine Drehung frei und ohne Reibung mit dem festen Anschlußkörper (3) ist, und daß die Klappe auf einer Seite der Achse schwerer ist als auch der anderen, wobei sich die Gleichgewichtslage der Klappe zwischen der von der Schwerkraft verursachten Kraft und der auf die Klappe durch die Wirkung eines eventuellen Gasflusses (F) ausgeübten Kraft ergibt, die zur Wirkung hat, die Klappe in Richtung der Verengung der Leitung schwenken zu lassen.

2. Drosselklappe nach Anspruch 1, dadurch gekennzeichnet, daß die Klappe einerseits aus einem flachen Blech (9), das mehr als einen Halbkreis und weniger als einen Kreis bildet, und andererseits aus einem Gewicht (10) besteht, das an dem Bereich des Blechs befestigt ist, der sich auf der Seite der Achse befindet, wo das Blech gemäß einer Sehne (8) abbricht, bevor der Kreis geschlossen ist, wobei eine (12) der Oberflächen des Gewichts (10) die zweite Fläche des Zweiflächlers der Klappe bildet, dessen erste Fläche aus dem Blech (9) besteht.

3. Drosselklappe nach Anspruch 1, dadurch gekennzeichnet, daß die Klappe aus einem entlang einer Sehne (19) gefalteten kreisförmigen Blech (9) besteht, wobei eines der beiden Teile des so gefalteten Blechs mit einem Gewicht (20) beschwert ist.

4. Drosselklappe nach einem der Ansprüche 1 oder 2, dadurch gekennzeichnet, daß die Kante des Zweiflächlers eine durch das Zentrum der in Abwicklung gesehen kreisförmigen Fläche der Klappe (4) verlaufende Sehne (19) ist.
